# EUROPEAN PATENT SPECIFICATION

(11) **EP 2 045 149 B1**
(45) Date of publication and mention of the grant of the patent: **16.02.2011**
(21) Application number: 08016272.0
(22) Date of filing: 16.09.2008
(51) Int. Cl.: B60R 22/185

(54) **Seat belt through anchor, seat belt apparatus and vehicle**
Sicherheitsgurt Umlenkbeschlag, Sicherheitsgurteinrichtung und Fahrzeug mit einer Sicherheitsgurteinrichtung
Renvoi de sangle de ceinture de sécurité, dispositif de ceinture de sécurité et véhicule équipé d'un tel dispositif

(30) Priority: 02.10.2007 JP 2007258856
(43) Date of publication of application: 08.04.2009
(73) Proprietor: Takata Corporation, Tokyo 106-8510 (JP)
(72) Inventor: Suyama, Yoji, Minato-ku, Tokyo 106-8510, (JP); Tabata, Yuki, Minato-ku, Tokyo 106-8510, (JP); Nishimine, Hideki, Minato-ku, Tokyo 106-8510, (JP)
(74) Representative: Banzer, Hans-Jörg

(56) References cited:
- DE-C1- 19 913 423
- US-A- 4 993 746
- US-A- 5 415 433
- US-B1- 6 250 684

## Description

### Technical Field

The present invention relates to a through anchor through which a seat belt is hung, and more specifically to a seat belt through anchor provided with a stopping mechanism for preventing rotation of a hanging shaft, which is rotatable and on which the seat belt is hung, in the case when a pressing force of a predetermined magnitude or more is applied to the hanging shaft from the seat belt.

### Background Art

In a seat belt apparatus, a seat belt withdrawn from a retractor is hung through a through anchor and is routed to the front side of an occupant. The retractor includes a spring for pulling the seat belt toward a retracting direction, and thereby a tension in the retracting direction is always applied to the seat belt.

In either case when a seat belt is withdrawn or when the seat belt is retracted, a friction force of a through anchor is applied to the seat belt. A structure is known in which a through anchor is provided with a freely rotatable hanging shaft to allow the seat belt to be smoothly withdrawn or retracted by reducing the friction force, and the seat belt is hung on the hanging shaft.

Incidentally, there is a case that an EA mechanism is incorporated in a retractor. The retractor locks withdrawal of a seat belt to restrain an occupant to a seat in case of an emergency, such as a vehicle collision or the like. The EA mechanism serves, after withdrawal of the seat belt is locked, to absorb an impact applied to an occupant by feeding a seat belt gradually from a retractor, while a load is applied to the seat belt from the occupant.

If the hanging shaft of a through anchor is rotatable as described above, in the case when an occupant's load is applied to a seat belt after withdrawal of the seat belt is locked, this load is applied to an EA mechanism substantially as it is almost without being subjected to a friction force of the through anchor, which results in a necessity to employ an EA mechanism capable to bear a heavy load, and an increase in cost and weight of the EA mechanism.

In U.S. Patent No. 4993746, a seat belt through anchor is described that includes a stopping mechanism for preventing rotation of a hanging shaft in the case when a pressing force of a predetermined magnitude or more is applied to the hanging shaft from a seat belt.

In the publication, the hanging shaft includes a shaft (spindle) non-rotatably supported at its both ends by an anchor base (clevis) and a tube body (roller) rotatably attached outside the shaft. The inner diameter of the tube body is larger than the outer diameter of the shaft. From the outer periphery of the shaft, a projected portion (tooth) is provided so as to be projected. And, on the inner periphery of the tube body, a plurality of projected portions (teeth) extending in a direction along the axis center line of the tube body are provided spaced apart from each other in the circumferential direction of the tube body, and the space between the adjacent projected portions is a recessed portion with which the projected portion of the shaft is engageable.

In the publication, each of circumferential portions on both end sides of the tube body in the axis center line direction is an elastically deformable portion (spring extension). The elastically deformable portion is composed of a flexible material such as neoprene or the like.

On each of the both end faces of the tube body in the axis center line direction, an annular end cap (end cap) is attached, and the shaft is inserted through the center hole of each of the end caps. The tube body is supported by the shaft through the intermediary of the end caps so that the projected portion and the recessed portions are separated from each other.

While the pressing force applied to the tube body from a seat belt hung thereon is smaller than a predetermined value, the elastically deformable portions on both end sides of the tube body are not deformed. At this time, since the recessed portions on the inner periphery of the tube body and the projected portion on the outer periphery of the shaft are separated from each other, the tube body is freely rotatable.

When the pressing force applied to the tube body from the seat belt becomes a predetermined value or more, the elastically deformable portions on the both end sides of the tube body are each deformed as with being buckled; thereby the tube body approaches the shaft, and the projected portion and one of the recessed portions are mutually engaged, so the tube body becomes non-rotatable. As a result, a friction force is applied to the seat belt from the tube body.

### Disclosure of the Invention

### Problems to be Solved by the Invention

In the through anchor of the above U.S. Patent No. 4993746, the both sides of the tube body in its axis center line direction are each formed to be an elastically deformable portion, but since the elastically deformable portion constitutes a part of the exterior of the tube body, the elastically deformable portion and a seat belt hung on the tube body rub against each other. Therefore, the elastically deformable portion is demanded to have high durability as well as specified deformation properties. The through anchor provided with such a tube body having an elastically deformable portion costs high.

An object of the present invention is to provide a seat belt through anchor including a seat belt hanging shaft, which is constructed of a shaft non-rotatably supported at its both ends by an anchor base and a tube body rotatably attached outside the shaft, and having a stopping mechanism for preventing rotation of the tube body in the case when a pressing force of a predetermined magnitude or more is applied to the tube body from a seat belt, the seat belt through anchor being able to be constructed at low cost, while having good durability.

### Means for Solving the Problems

According to the present invention, this object is achieved by a seat belt through anchor as defined in Claim 1, a seat belt apparatus as defined in Claim 4 and a vehicle as defined in Claim 5. The dependent claims define preferred and advantageous embodiments of the invention.

A seat belt through anchor according to the present invention has a hanging shaft, on which a seat belt withdrawn from a retractor is hung on, and an anchor base supporting the both ends of the hanging shaft, which includes a shaft non-rotatably supported by the anchor base at its both ends and a tube body rotatably attached outside the shaft, the seat belt through anchor being provided with a stopping mechanism for preventing rotation of the hanging shaft in the case when a pressing force of a predetermined magnitude or more is applied to the tube body from the seat belt, the stopping mechanism being characterized in including a projected portion formed on either of the outer periphery of the shaft or the inner periphery of the tube body and a recessed portion formed on the other, with which the projected portion is engageable, a spring disposed between the tube body and the shaft, the spring applies a force to the tube body so that the recessed portion and the projected portion are separated from each other, when the pressing force applied to the tube body from the seat belt is smaller than the predetermined value, wherein, in the case when a pressing force of the predetermined value or more is applied to the tube body from the seat belt, the tube body approaches the shaft, and the projected portion and the recessed portion are mutually engaged, and thereby the rotation of the tube body is prevented.

According to an embodiment, the seat belt through anchor is characterized in that the spring is a leaf spring extending in a direction parallel to the axis center line of the hanging shaft.

According to another embodiment, the seat belt through anchor is characterized in that the shaft is provided with a guide surface for guiding the movement of the tube body and the tube body is movable along the guide surface in an approaching and separating direction with respect to the shaft, wherein the guide surface extends in a direction parallel to a bisecting line L₃ bisecting an intersection angle θ constituted between one extension direction L₁ in which the seat belt extends on the side of the retractor relative to the tube body and the other extension direction L₂ in which the seat belt extends on the side of an occupant seated on a seat relative to the tube body, in a state that the seat belt is worn by the occupant seated on the seat.

A seat belt apparatus according to the present invention includes a seat belt routed along the body of an occupant seated on a seat, a seat belt through anchor described above, through which the seat belt is hung, and a retractor, to which the rear end side of the seat belt is connected so as to be retractable and withdrawable.

A vehicle according to the present invention is provided with a seat belt apparatus as described above.

According to an embodiment, the vehicle is characterized in that the through anchor is mounted on a member in a rearward position relative to a vehicle seat so that the extension direction of the shaft becomes a substantially vehicle width direction.

According to another embodiment, the vehicle is characterized in that the through anchor is mounted on a pillar portion of the vehicle so that the extension direction of the shaft becomes a substantially vehicle fore-and-aft direction.

### Advantages

In a seat belt through anchor of the present invention, and a seat belt apparatus and a vehicle each provided with this through anchor of the present invention, a spring is installed between a tube body and a shaft of the through anchor and applies a force to the tube body so that a projected portion and a recessed portion, which are formed on the inner periphery of the tube body and the outer periphery of the shaft, respectively, are separated. Because of this, the whole of the tube body can be constructed of hard materials, so the durability of the tube body can be made favorable. Additionally, since a tube body equivalent to a general conventional one constructed from low-cost plastic or the like can be employed, it is possible to construct the through anchor at relatively low cost.

In the present invention a leaf spring is preferably used as the spring for applying a force to the tube body. This leaf spring is inexpensive. Additionally, space-saving of the installation space for a spring can be implemented by disposing the leaf spring so as to extend in a direction parallel to the axis center line of the hanging shaft.

According to an embodiment, the shaft is provided with a guide surface for guiding the movement of the tube body, and further, the guide surface extends in a direction parallel to a bisecting line L₃ bisecting an intersection angle θ between an extension direction L₁ in which the seat belt extends on the side of the retractor relative to the tube body and another extension direction L₂ in which the seat belt extends on the side of an occupant seated on a seat relative to the tube body, in a state that the seat belt is worn by the occupant seated on the seat. In this configuration, when a pressing force of a predetermined magnitude or more is applied to the tube body from a seat belt in a state that the seat belt is worn by the occupant seated on the seat, since the direction of the pressing force and the extension direction of the guide surface become substantially parallel to each other, the tube body approaches the shaft while being guided by the guide surface. The locking of the tube body is thereby smoothly implemented.

On the other hand, in the case when a pressing force is applied to the tube body from the seat belt in a state that the seat belt is not worn by an occupant, i.e., when the seat belt is withdrawn for wearing the seat belt, or when the seat belt is retracted upon release of the seat belt from being worn, since the direction of the pressing force and the extension direction of the guide surface are intersected with each other, the tube body can hardly approach the shaft. With this, it is prevented or suppressed that the tube body is locked when the seat belt is withdrawn and retracted, withdrawing and retracting of this seat belt can be smoothly carried out.

In the present invention, the through anchor may be mounted on a member in a rearward position of a vehicle seat so that the extension direction of the shaft becomes a substantially vehicle width direction or on a pillar portion of the vehicle so that the extension direction of the shaft becomes a substantially vehicle fore-and-aft direction.

### Brief Description of the Drawings

Fig. 1 is a perspective view showing an example of a seat belt apparatus provided with a through anchor according to an embodiment of the present invention.
Fig. 2 is a perspective view of the through anchor according to an embodiment of the present invention.
Fig. 3 is an exploded perspective view of the through anchor.
Fig. 4 is a side view of an anchor base of the through anchor.
Fig. 5 is a side view of the through anchor of an airbelt as a seat belt and the vicinity of the through anchor.
Fig. 6(a) is a side view of a leaf spring used for the through anchor, and Fig. 6(b) is a top view of the leaf spring.
Fig. 7(a) is a side view of a bearing used for the through anchor, and Fig. 7(b) is an end face view of the bearing.
Fig. 8(a) is a cross-section view of a tube body constituting a hanging shaft of the through anchor, and Fig. 8(b) is a cross-section view along lines B-B of Fig. 8(a).
Fig. 9(a) is a vertical cross-section view of the through anchor when not locked, and Fig. 9(b) is a cross-section view along lines B-B of Fig. 9(a).
Fig. 10(a) is a vertical cross-section view of the through anchor when locked, and Fig. 10(b) is a cross-section view along lines B-B of Fig. 10(a).
Fig. 11 is a cross-section view of a portion similar to that of Fig. 8(a), showing a state in which an airbelt and a tube body are engaged with each other.
Fig. 12 is a perspective view of a seat belt apparatus, showing an arrangement in which the through anchor is attached to a pillar portion of a vehicle.
Fig. 13 is a side view of the through anchor in the arrangement of Fig. 12.

### Best Mode for Carrying Out the Invention

An embodiment of the present invention will now be described with reference to the attached drawings.

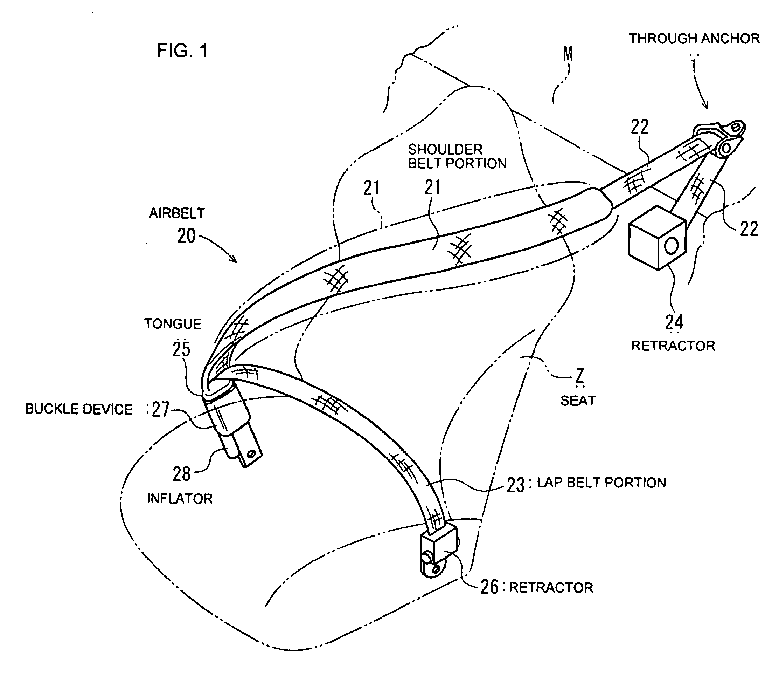

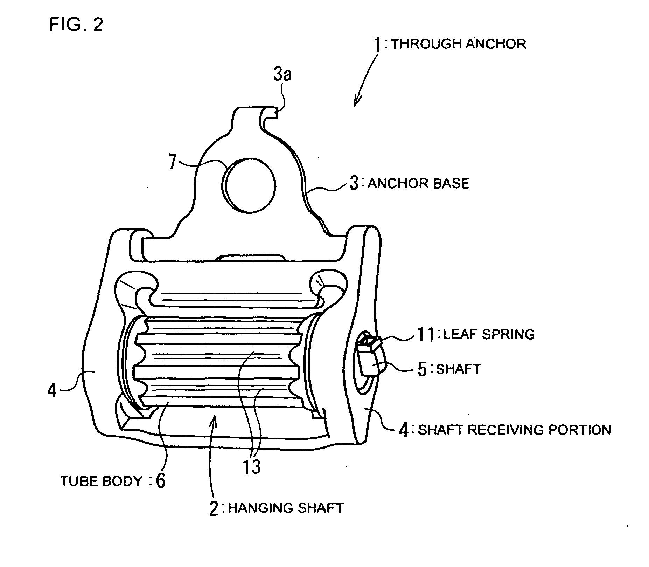

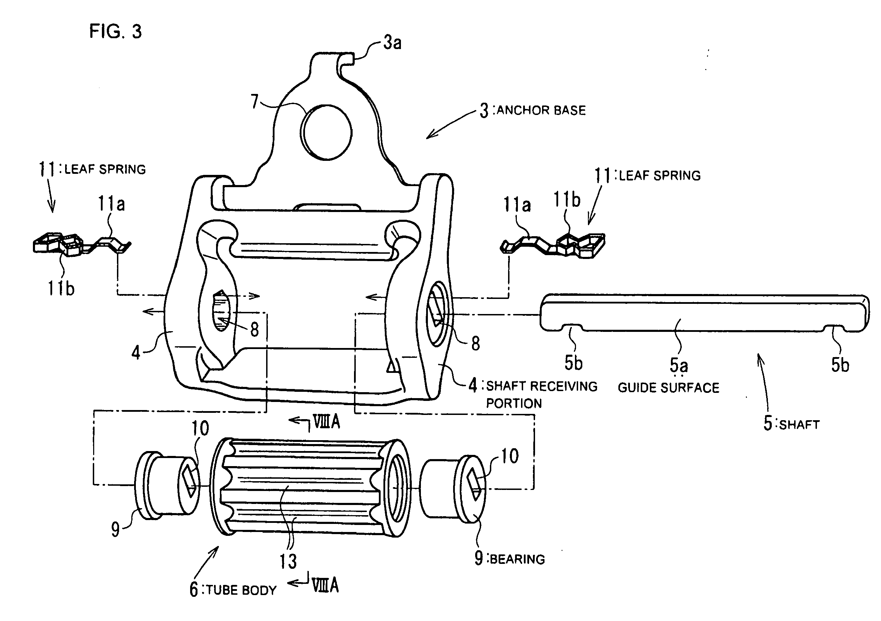

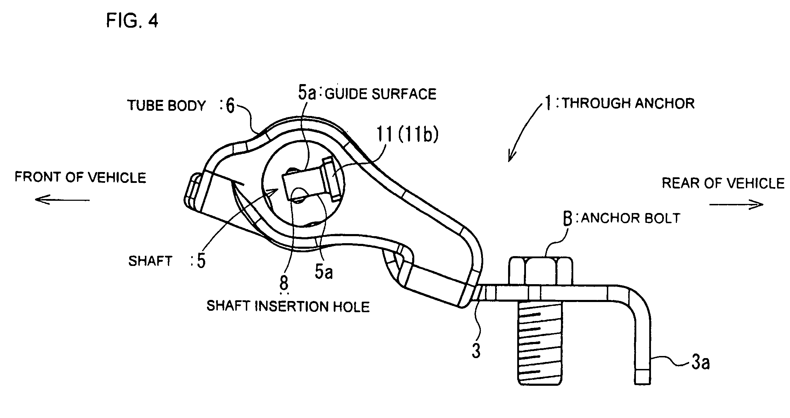

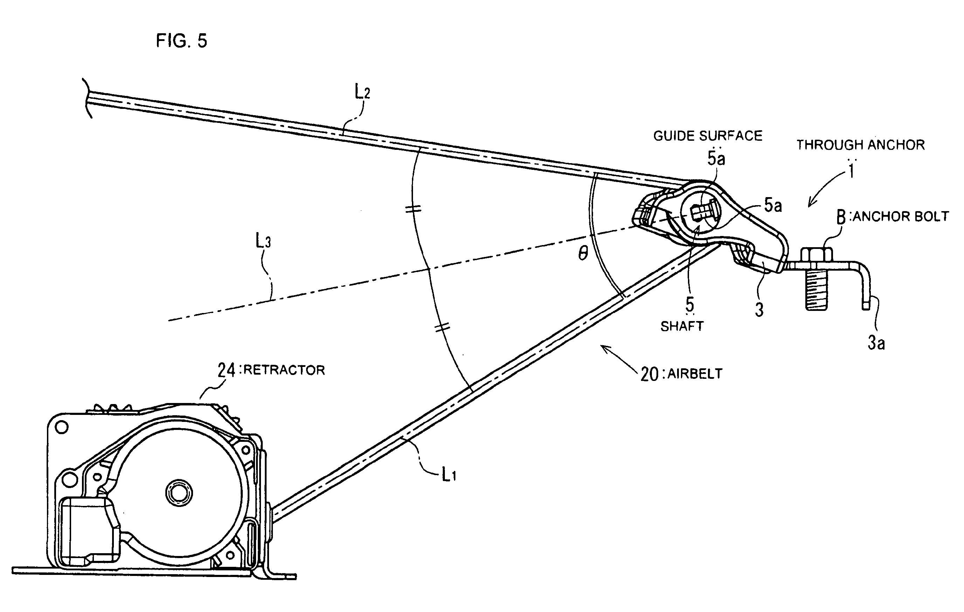

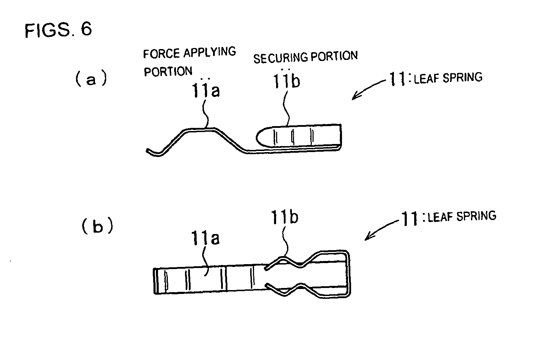

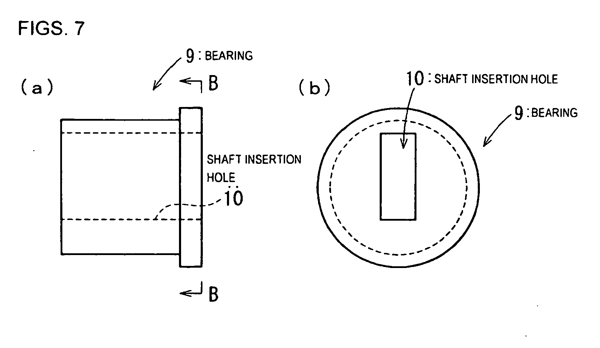

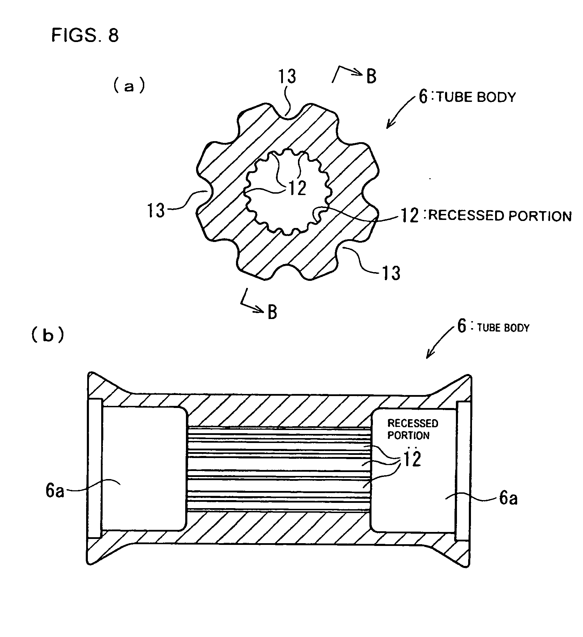

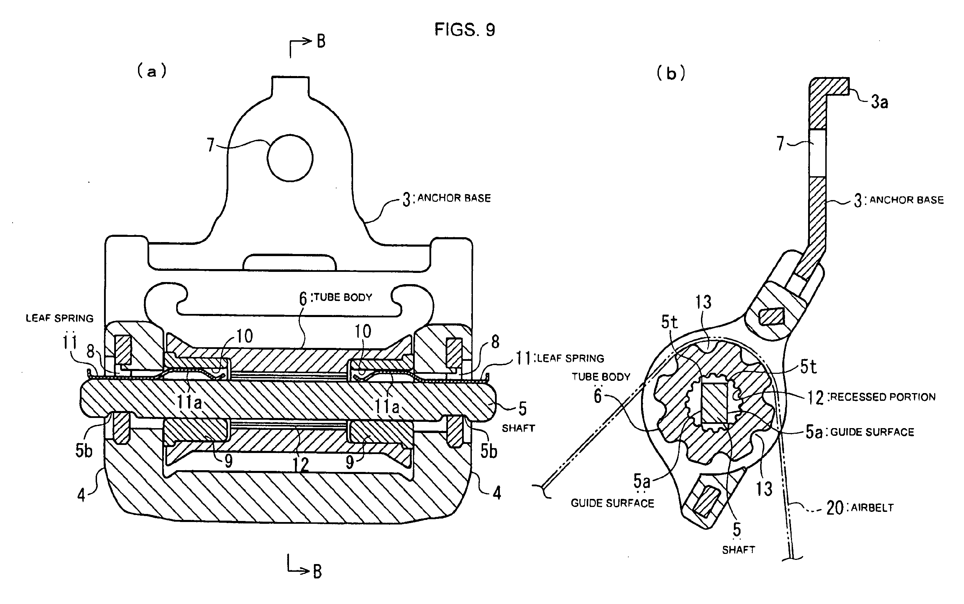

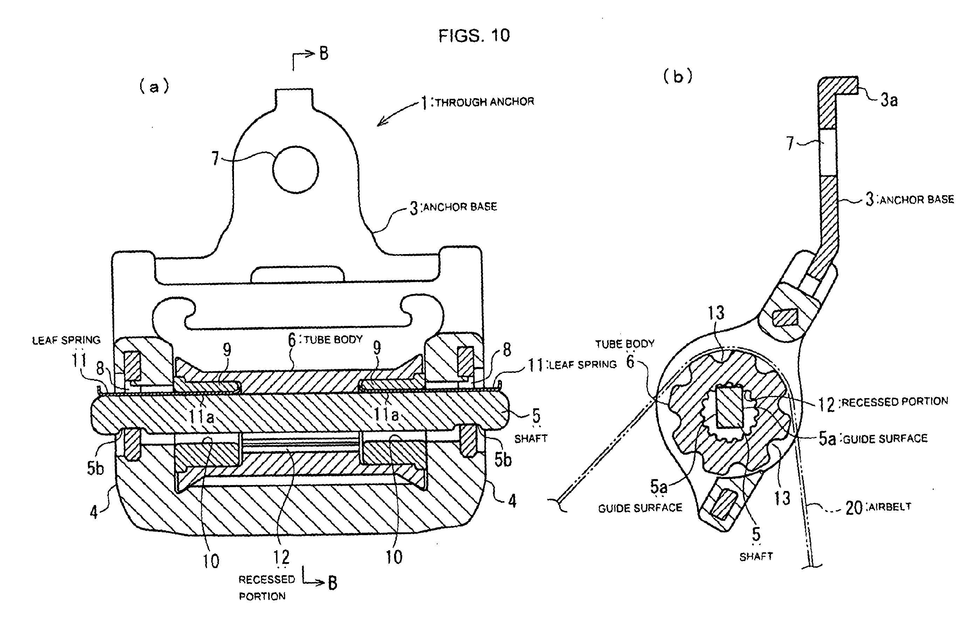

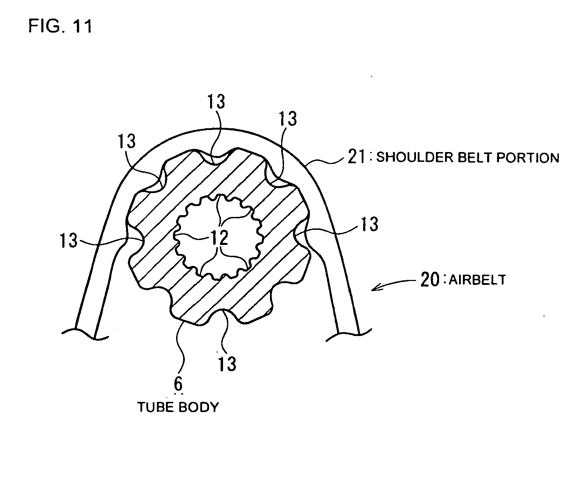

Fig. 1 is a perspective view showing an example of a seat belt apparatus provided with a through anchor according to an embodiment of the present invention, Fig. 2 is a perspective view of the through anchor, Fig. 3 is an exploded perspective view of the through anchor, Fig. 4 is a side view of an anchor base of the through anchor, Fig. 5 is a side view of the through anchor of an airbelt as a seat belt and the vicinity of the through anchor, Fig. 6(a) is a side view of a leaf spring used for the through anchor, Fig. 6(b) is a top view of the leaf spring, Fig. 7(a) is a side view of a bearing used for the through anchor, Fig. 7(b) is an end face view of the bearing (a view along arrows B-B of Fig. 7(a)), Fig. 8(a) is a cross-section view of a tube body constituting a hanging shaft of the through anchor (a cross-section view along lines VIIIA-VIIIA of Fig. 3), Fig. 8(b) is a cross-section view along lines B-B of Fig. 8(a), Fig. 9(a) is a vertical cross-section view of the through anchor when not locked, Fig. 9(b) is a cross-section view along lines B-B of Fig. 9(a), Fig. 10(a) is a vertical cross-section view of the through anchor when locked, Fig. 10(b) is a cross-section view along lines B-B of Fig. 10(a), and Fig. 11 is a cross-section view of a portion similar to that of Fig. 8(a), showing a state in which an airbelt and a tube body are engaged with each other.

Note that the through anchor, which is installed in a substantially vehicle fore-and-aft direction, is shown to be oriented along the up-and-down direction of the drawing in Figs. 2, 3 and Figs. 9, 10.

In this embodiment, a through anchor 1 is installed in a vehicle in which a driver's seat and a passenger's seat are provided and no rear seat is provided, i.e., a so-called two seater-type vehicle. However, the present invention is not limited to any particular model of vehicle.

The through anchor 1 includes a hanging shaft 2 on which a seat belt is hung, an anchor base 3 supporting the hanging shaft 2, and the like. The hanging shaft 2 is composed of a shaft non-rotatably mounted across a pair of shaft receiving portions 4, 4 provided to the anchor base 3, and a tube body 6 rotatably attached outside the shaft 5.

As shown in Fig. 1, this through anchor 1 is mounted on a behind-a-seat member M in a vehicle body so that the direction in which the shaft 5 extends becomes a substantially vehicle width direction (i.e., a substantially left and right direction). The anchor base 3 is disposed so that the shaft receiving portions 4, 4 are located on the vehicle front side and the opposite side thereof is located on the vehicle rear side. The anchor base 3 is provided with a bolt insertion hole 7 on the side opposite to the shaft receiving portions 4, 4, and the through anchor 1 is joined to the behind-a-seat member M using an anchor bolt B through the bolt insertion hole 7 so as to be pivotable in a substantially vehicle width direction. Reference numeral 3a denotes a lug by which the pivot angle of the anchor base 3 is restricted.

In this embodiment, a retractor 24 is installed on the vehicle front side relative to the through anchor 1. This retractor is located at a position lower than the through anchor 1, as shown in Fig. 5. From the retractor 24, an airbelt 20 being a seat belt is withdrawn. This airbelt 20 is withdrawn from the retractor 24 in a vehicle rear direction, and then is hung on the tube body 6 after being passed so as to be detoured from the underside of the tube body 6 to the upperside of the tube body 6 through the back of the tube body 6 on its vehicle rear side; then the airbelt 20 is routed from the tube body 6 toward the vehicle front side.

Note that in Fig. 5 the airbelt 20 is shown in a state of completion of wearing thereof, in which the airbelt 20 is routed on the front side of an occupant (not shown) seated on a seat Z (Fig. 1) and is latched to a buckle device 27 described later. The dot-and-dash line L₁ in Fig. 5 indicates the direction of the airbelt 20 extending on the side of the retractor 24 relative to the tube body 6 in the state of completion of wearing thereof, the dot-and-dash line L₂ indicates the direction of the airbelt 20 extending on the side of the occupant relative to the tube body 6 in the state of completion of wearing thereof, and the dot-and-dash line L₃ indicates the bisecting line bisecting an intersection angle θ constituted between these extension directions L₁, L₂. As shown in Fig. 5, this bisecting line L₃ extends in a substantially vehicle fore-and-aft direction and also in a slightly downward direction toward the vehicle front side.

The shaft 5 is a square bar-like member having a substantially rectangular cross-sectional shape in a direction intersecting its longitudinal direction in this embodiment. Hereafter, a cross section of the shaft 5 means the cross section in a direction intersecting its longitudinal direction. In this embodiment, among the outer surfaces of the shaft 5, a pair of side faces extending along a longer edge direction of the cross section become guide surfaces 5a, which guide the movement of the tube body 6.

It should be noted that, although the shaft 5 is a member formed in one piece at a predetermined thickness from the beginning as shown in Fig. 3 in this embodiment, a square bar-like shaft 5 may be constructed from plural thicknesses of a strip-like plain shaft having a thin thickness in the present invention.

The shaft receiving portions 4, 4 are disposed apart from each other by a predetermined distance in a substantially vehicle width direction, and each of the shaft receiving portions 4, 4 is provided with a shaft insertion hole 8, which passes therethrough in a substantially vehicle width direction. As shown in Fig. 4, this shaft insertion hole 8 has an opening shape of a substantially rectangle. The width of the shaft insertion hole 8 in its shorter edge direction is equal to or slightly larger than the width of a cross section of the shaft 5 in its shorter edge direction. And, the width of the shaft insertion hole 8 in its longer edge direction is equal to or slightly larger than the width of the sum of the width of a cross section of the shaft 5 in the longer edge direction and the thickness of a securing portion 11b of a leaf spring 11 described later.

As shown in Fig. 5, each of the shaft insertion holes 8 is formed so that its longer edges extend in a direction substantially parallel to the above bisecting line L₃.

The shaft 5 is inserted to each of the shaft insertion holes 8 so that the longer edge direction of its cross section meets the longer edge direction of the shaft insertion hole 8, and the both ends of the shaft 5 in its longitudinal direction are held non-rotatably in the shaft insertion holes 8, respectively. That is, the guide surfaces 5a of the shaft 5 extend along a direction substantially parallel to the bisecting line L₃ bisecting the intersection angle θ constituted between the one extension direction L₁ in which the airbelt 20 extends on the side of the retractor 24 relative to the tube body 6 and the other extension direction L₂ in which the airbelt 20 extends on the side of an occupant relative to the tube body 6, in a state that the airbelt 20 is worn by the occupant seated on a seat, as shown in Fig. 5.

In the present invention, the intersection angle (θ/2) constituted between the bisecting line L₃ and each of the extension directions L1, L2 is preferably to be the order of 16° to 28°, specifically the order of 20°.

It should be noted that there is formed a recessed portion 5b on a surface on each of both end sides of the shaft 5 in its longitudinal direction, the surface being oriented substantially to the front of the vehicle (hereafter, occasionally called the "front face"), and the shaft 5 is positioned (prevented from coming out from either of the shaft insertion holes 8) by that an edge portion substantially on the vehicle front side of each of the shaft insertion holes 8 is engaged with the recessed portion 5b.

As shown in Fig. 9(b), the inner diameter of the tube body 6 is larger than the cross- sectional width of the shaft 5 in its diagonal direction. On the inner periphery of the tube body 6, there are formed recessed portions 12 with which each of angular convex portions 5t (Fig. 9(b)), where a surface of the shaft 5 and each of the guide surfaces 5a intersect with each other, the surface being oriented substantially to the rear of the vehicle (hereafter, occasionally called the "rear face"), is engagable. The recessed portions 12 extending in the axis line direction of the tube body 6 each have a groove-like shape and are provided in plural number at an even spacing from each other in the circumferential direction of the tube body 6.

In this embodiment, there is provided a bearing 9 on each of the both ends of the tube body 6 in its axis line direction. In this embodiment, a large diameter portion 6a is configured on the both end sides of the tube body 6, the large diameter portion 6a having an inner diameter larger than that of the middle side and being fitted with the bearing 9 therein so as to be rotatable.

As shown in Fig. 7, the shaft insertion hole 10 of each of the bearings 9 also has an opening shape of a substantially rectangle. The width of the shaft insertion hole 10 in its shorter edge direction is also equal to or slightly larger than the width of a cross section of the shaft 5 in its shorter edge direction, and the width of the shaft insertion hole 10 in its longer edge direction is larger than the width of a cross section of the shaft 5 in the longer edge direction by a predetermined width. To each of the shaft insertion holes 10, the shaft 5 is inserted so that the longer edge direction of its cross section meets the longer edge direction of the shaft insertion hole 10.

Each of the bearings 9 is thereby held non-rotatably with respect to the shaft 5, and also is supported so as to be slidable along the guide surface 5a of the shaft 5 in a direction substantially parallel to the above bisecting line L₃.

Due to providing the bearings 9, the tube body 6 is supported rotatably with respect to the shaft 5 and also so as to be movable along the guide surface 5a in a direction substantially parallel to the above bisecting line L₃.

It should be noted that, as shown in Figs. 9(a), 9(b), each of the shaft insertion holes 10 is disposed so that the tube body 6 is supported substantially coaxially with respect to the shaft 5 by the respective bearings 9 in a state that the front face of the shaft 5 is in contact to the edge portion substantially on the vehicle front side (hereafter, occasionally called the "front edge") of the shaft insertion hole 10, i.e., in a state that the bearings 9 are each located at the movable limit position in a substantially vehicle rear direction.

There is provided a leaf spring 11 between the rear face of the shaft 5 and the edge portion substantially on the vehicle rear side (hereafter, occasionally called the "rear edge") of the shaft insertion hole 10 of the respective bearings 9, the leaf spring 11 applying a force to the bearing 9 in a substantially vehicle rear direction. In this embodiment, the leaf springs 11 are each inserted into the shaft insertion hole 10 of the respective bearings 9 from the shaft insertion hole 8 of the respective shaft receiving portions 4 along the rear face of the shaft 5.

The tip side of the leaf spring 11 in the insertion direction is configured to be a force applying portion 11a bent in a mountain shape toward a substantially vehicle rear direction, and this force applying portion 11a is involved between the rear face of the shaft 5 and the rear edge of the shaft insertion hole 10 of the respective bearings 9 to serve for applying a force to the respective bearings 9 toward a substantially vehicle rear direction. Additionally, on the rear end side of the leaf spring 11 in the insertion direction, there is provided a securing portion 11b engaged to the shaft insertion hole 8 of the respective shaft receiving portions 4, and the leaf spring 11 is secured (prevented from coming out from either of the shaft insertion holes 10, 8) by that the securing portion 11b engages with the side edge of the shaft insertion hole 8.

The leaf springs 11 are each configured so that, when a pressing force of a predetermined magnitude or more is applied to the tube body 6 from a seat belt hung on the tube body 6 toward a substantially vehicle front direction (a direction substantially parallel to the above bisecting line L₃), the force applying portion 11a thereof is elastically deformed so as to be flattened, and allows the bearing 9 to move along a substantially vehicle front direction, i.e., the tube body 6 to move along a substantially vehicle front direction.

In this embodiment, a stopping mechanism for the tube body 6 is constructed of the angular convex portions 5t of the shaft 5, the recessed portions 12 inside the tube body 6, and the leaf springs 11.

In this embodiment, there are provided recessed portions 13 also on the outer periphery of the tube body 6 so as to extend in the axis line direction thereof in plural number at an even spacing from each other in the circumferential direction thereof. The recessed portions 13 serve for receiving wrinkles arising on a curved portion of a shoulder belt portion 21 of the airbelt 20 (described later).

In this embodiment, as described above, the airbelt 20 having an inflatable shoulder belt portion 21 is hung on the tube body 6 of the through anchor 1.

The airbelt 20 includes the shoulder belt portion 21, which is routed diagonally along the front side of the upper body of an occupant seated on a vehicle seat Z (Fig. 1), a webbing 22, the tip of which is connected to the rear end of the shoulder belt portion 21, and a lap belt portion 23, which is routed over a near portion of the hip of the occupant in a left and right direction. The rear end side of the webbing 22 is joined to the retractor 24 so as to be retractable and withdrawable. This webbing 22 is fabricated of a non-inflatable belt material as in the case of a general seat belt. The shoulder belt portion 21 and the webbing 22 are hung on the tube body 6 of the through anchor 1.

Although a detailed illustration is omitted, the shoulder belt portion 21 is formed in a way that a thick width belt-like bag is folded to become a thin belt-like one and is covered with a cover; in normal times, it is maintained in a belt-like shape.

Incidentally, when the shoulder belt portion 21 having multilayers of base cloth constituting the bag and cover like this is bent along the perimeter of the tube body 6 of the through anchor 1, one side thereof facing the tube body 6 is loosened, which causes wrinkles, as shown in Fig. 11. In this embodiment, there are provided grooves 13 on the outer periphery of the tube body 6, and due to entering of the wrinkles created on the shoulder belt portion 21 into the grooves 13, the shoulder belt portion 21 is allowed to bend smoothly along the outer periphery of the tube body 6. The shoulder belt portion 21 is thus able to pass smoothly through the through anchor 1.

The tip side of the shoulder belt portion 21 and the tip side of the lap belt portion 23 are each connected to a tongue 25. In this embodiment, the lap belt portion 23 is also fabricated of a non-inflatable belt material as in the case of an ordinary seat belt. The rear end side of the lap belt portion 23 is also joined to the retractor 26 so as to be retractable and withdrawable. On the opposite side of the retractor 26 across the seat Z, there is provided a buckle device 27 to which the tongue 25 is latched.

In this embodiment, an inflator 28 is provided to the buckle device 27, the inflator 28 allowing the shoulder belt portion 21 to be inflated by supplying gas to the bag of the shoulder belt portion 21.

The retractors 24, 26 are provided with a locking mechanism for locking withdrawal of the webbing 22 and the lap belt portion 23, respectively, in case of an emergency, such as a vehicle collision or the like, and also an EA mechanism for absorbing an impact applied to the occupant by gradually feeding the webbing 22 and the lap belt portion 23 when a load of a predetermined magnitude or more is applied to the webbing 22 and the lap belt portion 23 in this locking state, respectively.

In this seat belt apparatus, when the vehicle comes into collision in a state that the occupant wears the airbelt 20, the locking of the retractors 24, 26 are activated to lock withdrawal of the webbing 22 and the lap belt portion 23, respectively, and the inflator 27 is also activated to inflate the airbelt 20; the occupant is received softly by the inflated airbelt 20.

At this time, when a pressing force of a predetermined value or more is applied to the tube body 6 of the through anchor 1 from the airbelt 20, the tube body 6 moves along the guide surfaces 5a of the shaft 5 in a substantially vehicle front direction against a force applied from the respective leaf springs 11, as shown in Figs. 10(a), 10(b); thereby the angular convex portions 5t of the shaft 5 engage with the recessed portions 12 of the tube body 6 and the revolution of the tube body is prevented.

After that, due to activation of the EA mechanism, the webbing 22 and the lap belt portion 23 are gradually withdrawn from the retractors 24, 26, respectively. With this, an impact applied to the occupant is absorbed. At this time, since the tube body 6 does not rotate, a large friction is generated between the airbelt 20 and the tube body 6. Therefore, the withdrawal force applied from the webbing 22 to the EA mechanism of the retractor 24 becomes relatively small. It should be noted that reduction in the load applied to an EA mechanism during activation like this results in relaxation of load-bearing properties required for the EA mechanism, which may enable to implement cost reduction and weight reduction of the EA mechanism.

After that, when the movement of the occupant comes to a halt and the load applied from the occupant to the airbelt 20 becomes small, the pressing force applied to the tube body 6 from the airbelt 20 also becomes smaller than the predetermined value and then the tube body 6 is pushed back along the guide surfaces 5a in a substantially vehicle rear direction due to a force applied from the respective leaf springs 11; thereby the recessed portions 12 of the tube body 6 and the angular convex portions 5t of the shaft 5 made separated from each other and the locking of the tube body 6 is released.

As described above, in this through anchor 1, the leaf springs 11 are provided between the tube body 6 and the shaft 5, and the leaf springs 11 each apply a force to the tube body 6 so that the recessed portions 12 on the inner periphery of the tube body 6 and the angular convex portions 5t of the shaft are separated. Because of this, the whole of the tube body 6 can be constructed of hard materials, so the durability of the tube body 6 can be made favorable. Additionally, since a tube body equivalent to a general conventional one constructed from low-cost plastic or the like can be employed, it is possible to construct the through anchor 1 at relatively low cost.

In this embodiment, on the shaft 5, there are provided the guide surfaces 5a for guiding movement of the tube body 6, and these guide surfaces 5a extend along a direction substantially parallel to the bisecting line L₃ bisecting the intersection angle θ constituted between the one extension direction L₁ in which the airbelt 20 extends on the side of the retractor 24 relative to the tube body 6 and the other extension direction L₂ in which the airbelt 20 extends on the side of an occupant relative to the tube body 6, in a state that the airbelt 20 is worn by the occupant. Therefore, in the case when a pressing force of a predetermined magnitude or more is applied to the tube body 6 from the airbelt 20 in a state that the airbelt 20 is worn by the occupant, since the direction of this pressing force and the extension direction of the guide surfaces 5a become substantially parallel to each other, the tube body 6 approaches the shaft 5 while being guided by the guide surfaces 5a. The locking of the tube body 6 is thereby smoothly implemented.

On the other hand, in the case when a pressing force is applied to the tube body 6 from the airbelt 20 in a state that the airbelt 20 is not worn by an occupant, i.e., when the airbelt 20 is withdrawn for being worn, or when the airbelt 20 is retracted upon release from being worn, since the direction of the pressing force and the extension direction of the guide surfaces 5a are intersected with each other, the tube body 6 can hardly approach the shaft 5. With this, it is prevented or suppressed that the tube body 6 is locked when the airbelt 20 is withdrawn and retracted, withdrawing and retracting of the airbelt 20 can be smoothly carried out.

It should be noted that according to the through anchor 1, as described above, even if a pressing force of a predetermined value or more is applied to the tube body 6 from the airbelt 20 and the stopping mechanism is activated, when the pressing force having been applied to the tube body 6 from the airbelt 20 becomes smaller than the predetermined value, the tube body 6 returns to its original position due to the force applied from the respective leaf springs 11, and the tube body 6 becomes freely rotatable again; the through anchor 1 returns to its usual usage state. It is not necessary to replace the through anchor 1 every time the stopping mechanism is activated, which brings about an economical advantage.

Although an example of installation of a through anchor 1 to a two seater-type vehicle is described in the above embodiment, as described above, the present invention is not limited to any particular model of vehicle, and it is applicable, for example, to a vehicle equipped with a rear seat. It should be noted that, in the case when the present invention is applied to a seat belt apparatus for a rear seat of a vehicle, the through anchor is installed at the same installation structure as or in a similar installation structure to that for the two seater-type vehicle. Likewise, in the case when the present invention is applied to a vehicle having a pillar portion, the through anchor may be installed on the pillar portion.

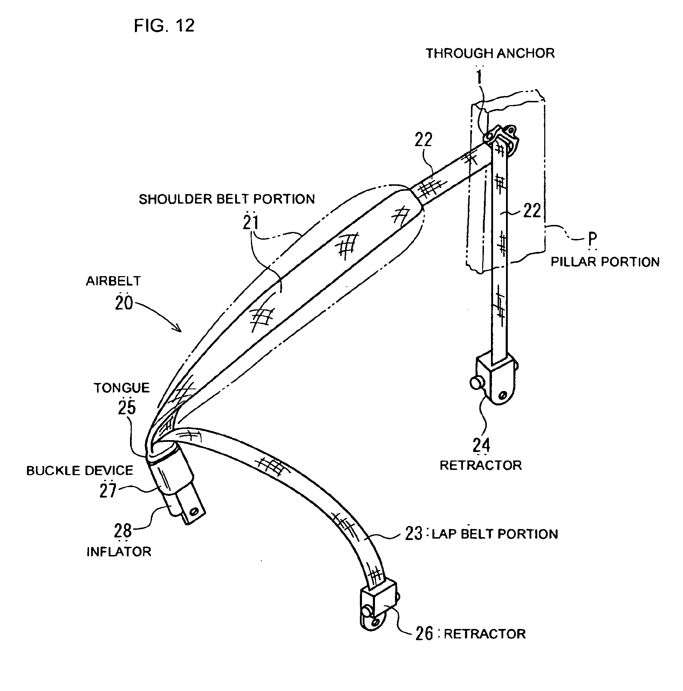

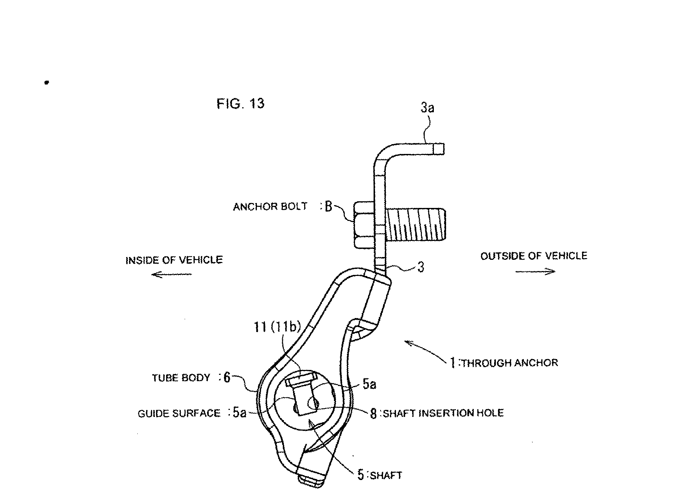

Fig. 12 is a perspective view of a seat belt apparatus, showing an arrangement in which a through anchor is attached to a pillar portion of a vehicle, and Fig. 13 is a side view of the through anchor in the arrangement of Fig. 12.

In this embodiment, a through anchor 1 is installed on a pillar portion P of a vehicle body so that the extension direction of its shaft 5 becomes a substantially vehicle fore-and-aft direction. An anchor base 3 of this through anchor 1 is disposed so that the side of its shaft receiving portions 4, 4 comes to the lower side and the side of its bolt insertion hole 7 comes to the upperside, and is attached rotatably to the pillar portion P using an anchor bolt B through the bolt insertion hole 7 in a substantially vehicle fore-and-aft direction.

In this embodiment, a retractor 24 is mounted in a position lower than the through anchor 1. An airbelt 20 is withdrawn upwardly from the retractor 24, and then is hung on a tube body 6 after being passed so as to be detoured from the vehicle exterior side of the tube body 6 to the vehicle interior side of the tube body 6 through the upperside of the tube body 6; then the airbelt 20 is routed downwardly forward of a seat (not shown) from the tube body 6.

As shown in Fig. 13, in this embodiment, guide surfaces 5a of the shaft 5 extend in a substantially up-and-down direction and is slightly inclined to the vehicle interior side with distance to its top end.

Incidentally, also in this embodiment, although a detailed illustration is omitted, the guide surfaces 5a extend in a direction substantially parallel to the bisecting line bisecting the intersection angle constituted between one extension direction in which the airbelt 20 extends on the side of the retractor 24 relative to the tube body 6 and the other extension direction in which the airbelt 20 extends on the side of an occupant relative to the tube body 6, in a state that the airbelt 20 is routed on the front side of an occupant on a seat (not shown) and latched to a buckle device 27. Also in this embodiment, the intersection angle between the bisecting line and each of the one extension direction in which the airbelt 20 extends on the side of the retractor 24 relative to the tube body 6 and the other extension direction in which the airbelt 20 extends on the side of the occupant relative to the tube body 6 is preferably to be the order of 16° to 28°, specifically the order of 20°.

The other configurations of this embodiment are similar to those of the embodiment of Figs. 1 to 11 described above, and the reference numerals in Figs. 12, 13 identical to those in Figs. 1 to 11 denote identical parts.

The actuation of the through anchor 1 in this embodiment is similar to that of the embodiment of Figs. 1 to 11, except that the extension direction of the shaft 5 becomes a substantially vehicle fore-and-aft direction and the direction of pressing force applied to the tube body 6 from the airbelt 20 becomes a substantially up-and-down direction.

The above embodiments each indicate an example of the present invention, and the present invention is not limited to each of the embodiments described above.

In present invention, for example, the seat belt hung on the hanging shaft (tube body) of the through anchor may be not an airbelt, but a normal seat belt of a non-inflatable type. In this case, the grooves 13 on the outer periphery of the tube body 6 may be omitted.

## Claims

1. A seat belt through anchor having a hanging shaft (2), on which a seat belt (20) withdrawn from a retractor (24) is hung on, and an anchor base (3) supporting the both ends of the hanging shaft (2), which includes a shaft (5) non-rotatably supported by the anchor base (3) at its both ends and a tube body (6) rotatably attached outside the shaft (5), the seat belt through anchor (1) being provided with a stopping mechanism for preventing rotation of the hanging shaft (2) in the case when a pressing force of a predetermined magnitude or more is applied to the tube body (6) from the seat belt (20), the stopping mechanism comprising
a projected portion (5t) formed on either of the outer periphery of the shaft (5) or the inner periphery of the tube body (6) and a recessed portion (12) formed on the other, with which the projected portion (5t) is engageable;
**characterised in that** the stopping mechanism further comprises
a spring (11) disposed between the tube body (6) and the shaft (5), the spring (11) applying a force to the tube body (6) so that the recessed portion (12) and the projected portion (5t) are separated from each other, when the pressing force applied to the tube body (6) from the seat belt (20) is smaller than the predetermined value,
wherein, in the case when a pressing force of the predetermined value or more is applied to the tube body (6) from the seat belt (20), the tube body (6) approaches the shaft (5), and the projected portion (5t) and the recessed portion (12) are mutually engaged, and thereby the rotation of the tube body (6) is prevented.

2. The seat belt through anchor according to Claim 1, **characterized in that** the spring (11) is a leaf spring (11) extending in a direction parallel to the axis center line of the hanging shaft (2).

3. The seat belt through anchor according to Claim 1 or 2, **characterized in that** the shaft (5) is provided with a guide surface (5a) for guiding the movement of the tube body (6) and the tube body (6) is movable along the guide surface (5a) in an approaching and separating direction with respect to the shaft (5),
wherein the guide surface (5a) extends in a direction parallel to a bisecting line L₃ bisecting an intersection angle θ constituted between one extension direction L₁ in which the seat belt (20) extends on the side of the retractor (24) relative to the tube body (6) and the other extension direction L₂ in which the seat belt (20) extends on the side of an occupant seated on a seat (Z) relative to the tube body (6), in a state that the seat belt (20) is worn by the occupant seated on the seat (Z).

4. A seat belt apparatus, comprising:
a seat belt (20) routed along the body of an occupant seated on a seat (Z);
a seat belt through anchor (1) described in any one of Claims 1 to 3, through which the seat belt (20) is hung; and
a retractor (24), to which the rear end side of the seat belt (20) is connected so as to be retractable and withdrawable.

5. A vehicle provided with a seat belt apparatus of Claim 4.

6. The vehicle according to Claim 5, **characterized in that** the through anchor (1) is mounted on a member (11) in a rearward position relative to a vehicle seat (Z) so that the extension direction of the shaft (5) becomes a substantially vehicle width direction.

7. The vehicle according to Claim 5, **characterized in that** the through anchor (1) is mounted on a pillar portion (P) of the vehicle so that the extension direction of the shaft (5) becomes a substantially vehicle fore-and-aft direction.

## Patentansprüche

1. Durchgangverankerung für einen Sitzgurt, aufweisend eine hängende Welle (2), auf welcher ein Sitzgurt (20), welcher von einer Aufrollvorrichtung (24) abgezogen wird, hängt, und eine Verankerungsbasis (3), welche beide Enden der hängenden Welle (2) hält, die eine Welle (5), welche nicht drehbar an ihren beiden Enden durch die Verankerungsbasis (3) gehalten wird, und einen Rohrkörper (6), welcher drehbar außerhalb der Welle (5) angebracht ist, umfasst, wobei die Durchgangverankerung (1) für einen Sitzgurt mit einem Stoppmechanismus versehen ist, um eine Drehung der hängenden Welle (2) für den Fall zu verhindern, wenn eine Druckkraft mit einer vorbestimmten Stärke oder mehr von dem Sitzgurt (20) auf den Rohrkörper (6) aufgebracht wird, wobei der Stoppmechanismus einen hervorragenden Abschnitt (5t), welcher entweder auf dem Außenumfang der Welle (5) oder dem Innenumfang des Rohrkörpers (6) ausgebildet ist und einen vertieften Abschnitt (12), welcher auf dem jeweils anderen ausgebildet ist und mit welchem der hervorragende Abschnitt (5t) in Eingriff bringbar ist, umfasst;
**dadurch gekennzeichnet,**
**dass** der Stoppmechanismus darüber hinaus eine Feder (11) umfasst, welche zwischen dem Rohrkörper (6) und der Welle (5) angeordnet ist, wobei die Feder (11) auf den Rohrkörper (6) eine Kraft ausübt, so dass der vertiefte Abschnitt (12) und der hervorragende Abschnitt (5t) voneinander getrennt werden, wenn die Druckkraft, welche von dem Sitzgurt (20) auf den Rohrkörper (6) ausgeübt wird, kleiner als die vorbestimmte Stärke ist, und
**dass** für den Fall, wenn eine Druckkraft der vorbestimmten Stärke oder mehr von dem Sitzgurt (20) auf den Rohrkörper (6) ausgeübt wird, sich der Rohrkörper (6) der Welle (5) nähert und der hervorragende Abschnitt (5t) und der vertiefte Abschnitt (12) wechselseitig in Eingriff kommen und dadurch die Drehung des Rohrkörpers (6) verhindert wird.

2. Durchgangverankerung für einen Sitzgurt nach Anspruch 1, **dadurch gekennzeichnet, dass** die Feder (11) eine Blattfeder (11) ist, welche sich in einer Richtung parallel zu der Achsenmittellinie der hängenden Welle (2) erstreckt.

3. Durchgangverankerung für einen Sitzgurt nach Anspruch 1 oder 2,
**dadurch gekennzeichnet,**
**dass** die Welle (5) mit einer Führungsoberfläche (5a) versehen ist, um die Bewegung des Rohrkörpers (6) zu führen, und dass der Rohrkörper (6) entlang der Führungsoberfläche (5a) in einer sich der Welle (5) nähernden oder von der Welle entfernenden Richtung bewegbar ist, und
**dass** sich die Oberfläche (5a) in einer Richtung parallel zu einer Halbierungslinie L₃ erstreckt, welche einen Winkel Θ halbiert, welcher zwischen einer Ausbreitungsrichtung L₁, in welcher sich der Sitzgurt (20) auf der Seite der Aufrollvorrichtung (24) relativ zu dem Rohrkörper (6) erstreckt, und der anderen Ausbreitungsrichtung L₂, in welcher sich der Sitzgurt (20) auf der Seite eines Insassen, der auf einem Sitz (Z) sitzt, relativ zu dem Rohrkörper (6) in einem Zustand, in welchem der Sitzgurt (20) durch den Insassen, der auf dem Sitz (Z) sitzt, getragen wird, erstreckt, vorhanden ist.

4. Sitzgurtvorrichtung umfassend:
einen Sitzgurt (20), welcher entlang des Körpers eines Insassen, der auf einem Sitz (Z) sitzt, geführt ist;
eine Durchgangsverankerung (1) für einen Sitzgurt nach einem der Ansprüche 1 bis 3, durch welche der Sitzgurt (20) hängt; und
eine Aufrollvorrichtung (24), mit welcher die hintere Endseite des Sitzgurtes (20) verbunden ist, so dass er aufrollbar und herausziehbar ist.

5. Fahrzeug, welches mit einer Sitzgurtvorrichtung nach Anspruch 4 versehen ist.

6. Fahrzeug nach Anspruch 5, **dadurch gekennzeichnet, dass** die Durchgangsverankerung (1) an einem Teil (11) in einer relativ zu einem Fahrzeugsitz (Z) rückwärtigen Position angebracht ist, so dass die Ausbreitungsrichtung der Welle (5) im Wesentlichen in der Breitenrichtung des Fahrzeugs liegt.

7. Fahrzeug nach Anspruch 5, **dadurch gekennzeichnet, dass** die Durchgangsverankerung (1) an einem Säulenabschnitt (P) des Fahrzeugs angebracht ist, so dass die Ausbreitungsrichtung der Welle (5) im Wesentlichen in einer Vorwärts-Rückwärts-Richtung des Fahrzeugs liegt.

## Revendications

1. Ancrage de passage pour une ceinture de sécurité comportant un arbre de suspension (2), sur lequel une ceinture de sécurité (20) retirée d'un enrouleur (24) est accrochée, et une base d'ancrage (3) supportant les deux extrémités de l'arbre de suspension (2), qui comprend un arbre (5) supporté de façon non rotative à ses deux extrémités par la base d'ancrage (3) et un corps tubulaire (6) fixé de façon rotative à l'extérieur de l'arbre (5), l'ancrage de passage pour la ceinture de sécurité (1) étant pourvue d'un mécanisme d'arrêt pour empêcher la rotation de l'arbre de suspension (2) dans le cas où une force de pression d'une valeur égale ou supérieure à une valeur prédéterminée est appliquée sur le corps tubulaire (6) à partir de la ceinture de sécurité (20), le mécanisme d'arrêt comprenant
une partie en saillie (5t) formée soit sur la périphérie externe de l'arbre (5) soit sur la périphérie interne du corps tubulaire (6) et une partie en retrait (12) formée sur l'autre, avec laquelle la partie en saillie (5t) est en prise,
**caractérisée en ce que** le mécanisme de blocage comprend en outre
un ressort (11) disposé entre le corps tubulaire (6) et l'arbre (5), le ressort (11) appliquant sur le corps tubulaire (6) une force telle que la partie en retrait (12) et la partie en saillie (5t) se séparent l'une de l'autre, quand la force de pression appliquée sur le corps tubulaire (6) à partir de la ceinture de sécurité (20) est inférieure à la valeur prédéterminée,
dans lequel, dans le cas où une force de pression égale ou supérieure à la valeur prédéterminée est appliquée sur le corps tubulaire (6) à partir de la ceinture de sécurité (20), le corps tubulaire (6) se rapproche de l'arbre (5), et la partie en saillie (5t) et la partie en retrait (12) viennent en prise l'une avec l'autre, empêchant ainsi la rotation du corps tubulaire (6).

2. Ancrage de passage pour ceinture de sécurité selon la revendication 1, **caractérisé en ce que** le ressort (11) est un ressort à lame (11) s'étendant dans une direction parallèle à la ligne de l'axe de l'arbre de suspension (2).

3. Ancrage de passage pour ceinture de sécurité selon la revendication 1 ou 2, **caractérisé en ce que** l'arbre (5) est muni d'une surface de guidage (5a) pour guider le mouvement du corps tubulaire (6) et **en ce que** le corps tubulaire (6) est mobile le long la surface de guidage (5a) dans une direction d'approche et de séparation de l'arbre (5),
dans lequel la surface de guidage (5a) s'étend dans une direction parallèle à une ligne oblique L₃ bissectrice d'un angle intersection θ constituée entre une direction d'extension L₁, où la ceinture de sécurité (20) s'étend du côté de l'enrouleur (24) par rapport au corps tubulaire (6), et l'autre direction d'extension L2 où la ceinture de sécurité (20) s'étend du côté d'un occupant assis sur un siège (Z) par rapport au corps tubulaire (6), dans la situation dans laquelle la ceinture de sécurité (20) est portée par l'occupant assis sur le siège (Z).

4. Un dispositif de ceinture de sécurité, comprenant:
- une ceinture de sécurité (20) disposée le long du corps d'un occupant assis sur un siège (Z);
- un ancrage de passage pour la ceinture de sécurité (1) selon l'une quelconque des revendications 1 à 3, au moyen duquel la ceinture de sécurité (20) est suspendue,
- et un enrouleur (24), à l'extrémité arrière duquel la ceinture de sécurité (20) est reliée de manière à être rétractable et retirable.

5. Un véhicule muni d'un dispositif de ceinture de sécurité selon la revendication 4.

6. Le véhicule selon la revendication 5, **caractérisé en ce que** l'ancrage de passage (1) est monté sur un élément (11) dans une position en arrière par rapport à un siège de véhicule (Z) de sorte que la direction d'extension de l'arbre (5) s'étende selon une direction sensiblement celle de la largeur du véhicule.

7. Le véhicule selon la revendication 5, **caractérisé en ce que** l'ancrage de passage (1) est monté sur une partie formant pilier (P) du véhicule de telle sorte que la direction d'extension de l'arbre (5) s'étende selon une direction sensiblement celle de la direction avant-arrière du véhicule.
